# EUROPEAN PATENT APPLICATION

(11) **EP 2 110 979 A1**
(43) Date of publication of application: **21.10.2009**
(21) Application number: 08103587.5
(22) Date of filing: 17.04.2008
(51) Int. Cl.: H04L 1/18, H04L 1/00

(54) **Communication network element and method transmitting data**

(71) Applicant: Nokia Siemens Networks Oy, 02610 Espoo (FI)
(72) Inventor: Chapman, Thomas Malcolm, Bitterne, Southampton, SO18 4RY (GB)
(74) Representative: Bruglachner, Thomas E.

(57) **Abstract**

A communication network element for transmitting data in a communication network is provided, wherein the network element comprises a detection unit adapted to detect an error message indicating that specific data is not received by another communication network element, a determination unit adapted to determine whether the error message is related to data transmitted by the network element, and a transmitting unit adapted to transmit the specific data to the other network element in case it is determined that the error message is not related to data transmitted by the network element.

## Description

### Field of invention

The present invention relates to the field of communication network elements and methods of transmitting data, in particular, to repeat transmission of data in a communication network. Furthermore, the present invention relates to a communication network, a program element and a computer readable medium.

### Art Background

Nowadays mobile communication networks are widely used. These communication networks comprise a plurality of network cells each having at least one base station used to receive and transmit signals from user equipment, e.g. mobile phones or PDAs. A plurality of different environments or systems are known, e.g. GERAN, UTRAN, LTE, E-UTRAN, WCDMA, or WLAN. For ensuring a good performance and in particular a secure data transmission it has to be ensured that all data, data signals, or data packets are received at the intended recipient and at possible relay stations, like base stations of the mobile communication network.

For example, in a WCDMA network, uplink throughput is power and interference restricted, wherein interference arises because terminals or mobile phones transmit WCDMA signals in parallel, while the transmission is not performed on communication channels which are not orthogonal to one another. Thus, when decoding the signal from a particular terminal using a particular communication channel the signals from all other terminals appear as interference. Also, as the terminal approaches the edge of a cell, the pathloss to the cell, i.e. to a base station of the cell, increases and hence the transmit power required for maintaining a given Signal to Interference and Noise Ratio (SINR) at the base station increases. However, the terminal has a restricted transmit power capability, and hence once the terminal reaches its maximum transmit power, if the pathloss increases further then the receive SINR decreases and with it, the terminals user throughput.

In the LTE uplink, the interference level is lower due to improved intra-cell orthogonality, however inter-cell interference and thermal noise are still present and of course the terminal still has a limited transmit power.

In the downlink, both WCDMA and LTE are in general limited by inter-cell interference. As a terminal approaches the cell edge, the level of received signal from its own base station will decline, whilst interfering signals from other cells will increase, leading to a situation in which the receive SINR, and hence the downlink throughput decreases.

In order to increase the transmission quality a so called Hybrid Automatic Repeat Request (HARQ) error correction method can be employed. When using HARQ the transmitting side consecutively transmits transmission time intervals (TTI) belonging to the HARQ processes. The receive side attempts to decode each process and sends back an acknowledge (ACK) and negative acknowledge (NACK) message or signal, upon which the transmit side either transmits new data in the process or retransmits the data transmitted in the previous cycle of the process, respectively. The receiver soft combines multiple receptions of the same data protocol data unit (PDU).

However, these retransmissions may decrease the performance of the communication system.

Thus, there may be a need for a communication network element, a method for transmitting data, a communication network, a program element, and a computer readable medium providing an improved performance of the communication network.

### Summary of the Invention

This need may be met by the subject-matter according to the independent claims. Advantageous embodiments of the present invention are described by the dependent claims.

According to an exemplary aspect of the invention a communication network element for transmitting data in a communication network is provided, wherein the network element comprises a detection unit adapted to detect an error message indicating that specific data is not received by another communication network element, a determination unit adapted to determine whether the error message is related to data transmitted by the network element, and a transmitting unit adapted to transmit the specific data to the other network element in case it is determined that the error message is not related to data transmitted by the network element. In particular, the communication network may be a mobile communication network, e.g. a cellular communication network. Furthermore, the specific data may be formed by one or a plurality of data packets in case the communication network is a communication network using packet based transmission.

According to an exemplary aspect of the invention a communication network system is provided, which comprises a first communication network element and a second communication network element, wherein at least one of the first communication network element and the second network element is formed by a communication network element according to an exemplary aspect of the invention, and wherein one of the first communication network element and the second network element is formed by the another network element. In particular, the another network element may be formed by a base station and the network element according to an exemplary aspect is formed by a user equipment, e.g. a mobile phone or the like. Of course the communication network may comprise a plurality of communication network elements, wherein all or only some may be formed by communication network elements according to an exemplary aspect of the invention. Moreover, also base stations of the communication network element may be formed by network elements according to an exemplary aspect of the invention.

According to an exemplary aspect of the invention a method of transmitting data by using a communication network element via a communication network to another communication network element is provided, wherein the method comprises detecting an error message indicating that specific data is not received by the another communication network element, determining whether the error message is related to data transmitted by the network element, and transmitting the specific data to the another network element in case it is determined that the error message is not related to data transmitted by the network element.

According to an exemplary aspect of the invention a program element is provided, which, when being executed by a processor, is adapted to control or carry out a method according to an exemplary aspect of the invention.

According to an exemplary aspect of the invention a computer-readable medium, in which a computer program is stored which, when being executed by a processor, is adapted to control or carry out a method according to an exemplary aspect of the invention.

In this application the term "data" may particularly denote every kind of data which can be transmitted either via cable or line or wireless. In particular, the term "data" may include digital or analogue data relating to a phone call or a transmission of data as used in the connection with computer communications, e.g. programs, pictures, music title, or the like. In particular, the data may be transmitted as data packets in a packet based communication. Thus, the specific data may be formed by one or more data packets.

In this application the term "error message" may particularly denote every kind of message sent by a communication network element to one or a plurality of other communication network elements in case specific data, e.g. a data packet, is not received correctly at the intended recipient, e.g. due to low signal to noise ratio or due to low signal strength. Such an error message may be a Negative-ACKnowledge message (NACK message) in the case of a communication network element adapted to perform a so-called Hybrid Automatic Repeat Request (HARQ) error control method. In particular, an error message may be sent in case the specific data can not be decoded, e.g. information transmitted by this specific data is not recoverable.

By providing a network element adapted to transmit specific data, e.g. a data packet of a digital communication, which was not originally sent by this network element, it may be possible to increase performance of the communication network. In particular, it may be possible that not only the originally sending network element but also an additional network element, which has a position close to the original one and thus may have received the specific data, transmit the specific message in case the intended recipient, e.g. a base station, did not receive the specific data correctly and consequently did send a NACK message. By using additional network elements to retransmit the specific data it may be possible that on the one side the receiving power is increased either due to a closer position to the base station or due to a superposition of the transmission by the original sender and the additional network element.

Moreover, since the data throughput between the transmitting and the receiving side depends on the number of retransmissions of each protocol data unit (PDU) that are required before they are received correctly, it may be possible to decrease the number of retransmissions, and hence the performance of the system may be increased if the received power of each retransmission is increased. According to an exemplary embodiment of the invention this increasing of the receiving power may be achieved by enabling that a network element retransmits a specific transmission which network element is not the original sender.

Furthermore, also intra-cell interference may be reduced, since the additional network element transmits the same data as the network element of the original transmission which retransmit the specific data when receiving the NACK message, rather than transmitting different data and so presenting interference. The reduction of intra-cell interference may be in particular reduced in communication networks based on processes wherein the different network elements do not send on orthogonal channels, e.g. WCDMA networks.

The network element and the method according to an exemplary aspect of the invention may be in particular advantageous in uplink communication, since in general the sending power of end terminals like mobile phones is lower than of the base stations of cells the mobile phones are positioned in. Thus, the utilizing of additional network elements for retransmission may significantly increase the sending power and thus the received signal strength at the base station. However, it is of course also possible to use the method for the downlink communication as well. In the downlink communication an improved local coverage may be achievable.

A gist of an exemplary aspect may be seen in the providing of network elements which are adapted to perform a retransmission of specific data even in cases they did not perform the original transmission. Thus, the sending power of the retransmission may be increased, since multiple network elements are sending the specific data, while at the same time the probability of intra-cell interference may be reduced. Thus, it may be possible to say that the method according to an exemplary embodiment of the invention may provide a collaboration of several or all active terminals, e.g. mobile phones, when a retransmission is performed due to a failure in or low quality of the original transmission, in particular, when a HARQ transmission is performed. Preferably, the network element, e.g. the mobile phone, may have a decoding power which is sufficient to decode the transmissions received from other network elements, e.g. a mobile phone which performed the originally transmission. In particular, in the case of FDD communication, the respective network element may comprise an uplink receiver as well. Furthermore, the network elements may comprise a timing advance mechanism adapted to align or synchronize the uplink timing of the different network element.

Preferably, the communication network is adapted to cope with Discontinuous Transmission (DTX) of the Dedicated Physical Control Channel (DPCCH) from the network elements or user equipments that are listening to the uplink transmissions from the network element performing the original transmission. This may in particular apply to Frequency Division Duplex (FDD) networks, while Time Division Duplex (TDD) networks do not receive a continuous pilot.

Next, further exemplary embodiments of the communication network element are described. However, these embodiments also apply to the method of transmitting data, the communication network, the program element, and the computer readable medium.

According to another exemplary embodiment the communication network element further comprises a receiving unit, wherein the receiving unit is adapted to receive the error message and/or to receive the specific data.

In particular, the receiving unit may be adapted to receive data packets relating or corresponding to the specific data. In particular, the network element may comprise a receiving unit adapted to receive an NACK message and a normal data transmission, i.e. payload data, such as data relating to a telephone call or a digital data transmission. The receiving unit may comprise several sub-units adapted for receiving specific messages, e.g. one sub-unit may be adapted to receive the NACK message while another sub-unit may be adapted to receive the "normal" data transmission, e.g. the payload data. However, the receiving unit may also be formed by a single unit. In particular, the receiving unit may be adapted to receive error messages of a base station of the communication network and/or of other network elements, like mobile phones, PDA, laptops or the like, and may also be adapted to receive payload data from a base station and/or of other network elements, like mobile phones, PDA, laptops or the like.

According to another exemplary embodiment of the communication network element the determination unit is further adapted to determine whether the network element received the specific data correctly before the transmitting unit transmit the specific data to the other network element.

In particular, the transmitting unit is further adapted to transmit the specific data only in the case that it is determined that the specific data were received correctly. Moreover, the network element may comprise a receiving unit adapted to receive the specific data, e.g. payload data. By providing a possibility to check whether or not the specific data were correctly received by the network element it may be possible to ensure that the network element takes part in the retransmission only in the case that it received the specific data correct. Thus, it may be possible to avoid cases that the network element transmits incorrect data which might consequently decrease the transmission performance.

According to another exemplary embodiment of the communication network element the communication network is a Long Term Evolution network or a Wideband Code Division Multiple Access network.

According to another exemplary embodiment of the communication network element the network element is one out of the group consisting of a base station, a user equipment, a mobile phone, a PDA, and a laptop.

According to another exemplary embodiment the communication network element further comprises a synchronising unit, which is adapted to synchronize transmissions of the network element with transmissions of other network elements.

In particular, the synchronising unit may be adapted to synchronise the network communication element with another identical or similar network communication network element in such a way that the specific data are transmitted from both network elements in a synchronous way. This synchronised transmission may lead to an improved signal strength received at the another network element, e.g. a base station in case of an uplink communication, since the signal strength of the two or even of a higher number of network elements , e.g. mobile phones, are superposed. In particular, the synchronisation unit may be adapted to synchronise the network element with a Dedicated Physical Control Channel (DPCCH) of another network element, e.g. a mobile phone.

According to another exemplary embodiment the communication network element further comprises a receiving unit, wherein the receiving unit is adapted to receive the specific data, and wherein the transmitting unit is further adapted to use a same synchronisation timing and/or scrambling code for the transmission of the specific data as used in the transmission of the specific data received by the communication network element.

In particular, the communication network element, e.g. a mobile phone, may be adapted to receive an original transmission of the specific data transmitted to the another network element, e.g. a base station, and use the same synchronisation timing and/or the same scrambling code as in the original transmission.

Next, further exemplary embodiments of the method of transmitting data are described. However, these embodiments also apply to the communication network elements, the program element, and the computer readable medium.

According to another exemplary embodiment the method further comprises receiving the specific data at the network element. In particular, the method may further comprise verifying whether the specific data are received correctly at the network element, and transmitting the specific data to the another network element only in case that the specific data are received correctly at the network element.

According to another exemplary embodiment of the method the transmitting the specific data to the another network element is a synchronized transmitting. In particular, the transmission may be synchronized with transmissions of other network elements, e.g. network elements which perform the same method of transmitting data.

According to another exemplary embodiment of the method the synchronized transmission is performed by several network elements transmitting the same specific data at the same time and/or by using a common scrambling code.

Summarizing an exemplary aspect of the present invention may be seen in providing a communication method in a mobile communication network. For illustrative purposes a WCDMA uplink communication with multiple terminals in an active state may be considered, whose receive timing is synchronised at a receiver of a base station B of the communication network. The terminals or mobile phones may be divided into groups, which in general are located relatively close to one another. In each group, whilst one terminal is transmitting, the other terminals may receive the uplink signal from the transmitting terminal and attempt to decode it. The terminals of the group may be scheduled in a time sequence such that for each iteration of the sequence, each terminal gets an opportunity to transmit whilst others listen.

All of the terminals in a group may also monitor an ACK/NACK channel from the base station. If the base station transmits a NACK, then for the subsequent retransmission all of the terminals that successfully decoded the first transmission may retransmit the Protocol Data Unit (PDU) with the same timing and scrambling code as used by the initially transmitting user equipment (UE). It is expected that if the terminals are fairly near to one another in comparison with their distance from the base station, then a low power first transmission can be received by most or all of the terminals in the group but will be not correctly received by the base station. In an LTE uplink, a similar concept may be applied.

In the downlink, all of the terminals in the group may attempt to decode the downlink transmission to a particular terminal and monitor the ACK/NACK response from the terminal. The downlink and uplink transmissions may be scheduled such that the terminals in a group are scheduled with downlink transmissions one at a time and are not scheduled with uplink transmissions whilst they are listening for the ACK/NACK of another terminal. If a NACK is transmitted, then, in WCDMA when a High Speed Shared Control Channel (HS-SCCH) indicates a downlink retransmission, all of the terminals that correctly received the first transmission retransmit may use the downlink cell scrambling code and in synchronisation with the downlink signal.

The exemplary aspects and exemplary embodiments defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates a section of a communication network.
Fig. 2 schematically illustrates an allocation of transmission times for HARQ processes.
Fig. 3 schematically illustrates a sequence of actions.
Fig. 4 schematically illustrates a usage of a HARQ process.

### Detailed Description

The illustration in the drawing is schematically. Identical or similar elements are labeled with identical or similar reference signs.

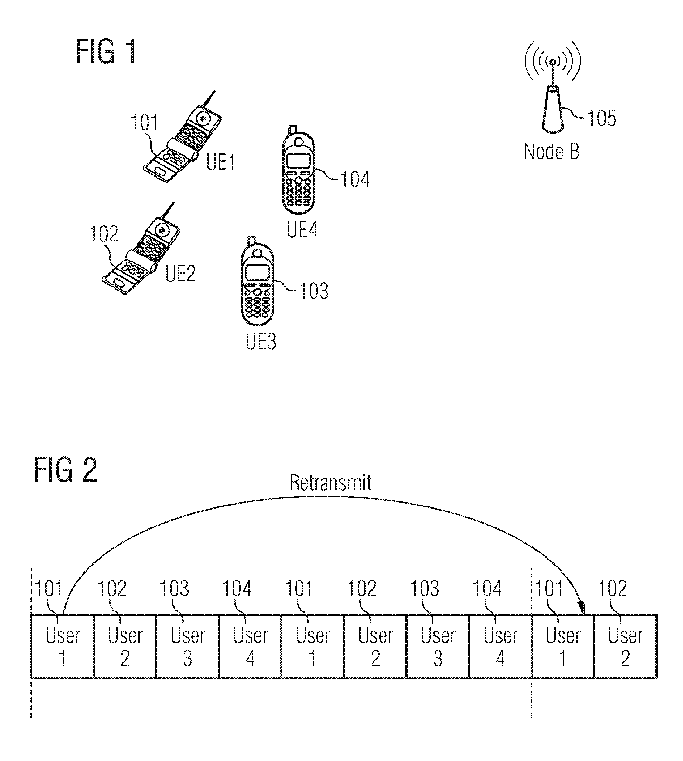

In the following, referring to Figs. 1 to 4, some basic principles of communication network elements according to exemplary embodiments will be explained.

Fig. 1 schematically illustrates a section of a communication network. In particular, Fig. 1 shows a group of four user equipments depicted as schematic mobile phones 101, 102, 103, and 104. In general a group of mobile phones are positioned relatively close to each other compared to the distance to a node B or base station 105. Each mobile phone of the group of the four mobile phones or terminals may be configured to perform WCDMA communication, i.e. may be WCDMA terminals, and may be in active state and configured to use High Speed Uplink (HSUPA). If the terminals are FDD terminals, then they possess an uplink receiver, or if they are TDD terminals then they receive uplink timeslots.

Fig. 2 schematically illustrates an allocation of transmission times for HARQ processes. There are eight HARQ processes. The network assigns each of the terminals 101, 102, 103, and 104 which are used by user 1, user 2, user 3, and user 4, respectively, two processes, as shown in Fig. 2.

Consider terminal 101 and its first HARQ process. The terminal makes a first transmission at a power level that is high enough for the nearby terminals 102, 103, and 104 to receive and decode the transmission, although not high enough that the base station 105 correctly decodes the transmission.

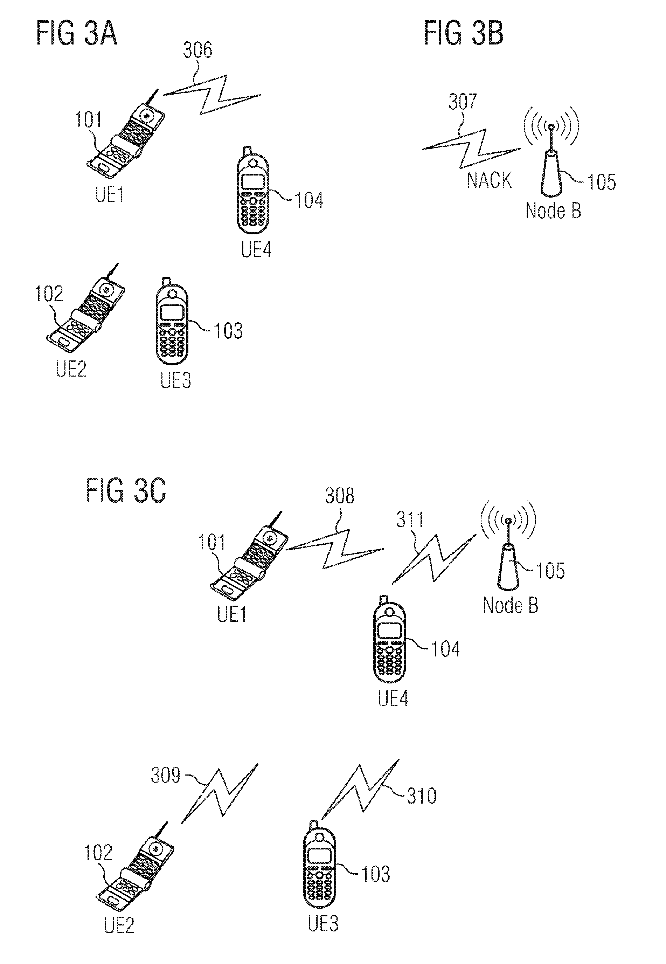

This step is schematically shown in Fig. 3A, wherein the schematic flash 306 indicates a transmission. Following this, the base station 106 transmits a NACK, which is received by all four terminals, which is schematically shown in Fig. 3B as the flash 307. The three other terminals all received the first transmission correctly and retransmit the PDU, which is schematically shown as flashs 308, 309, 310, and 311. Now, the base station receives the Protocol Data Unit (PDU) correctly (shown in Fig. 3C) and transmits an ACK. Thus, a multi terminal retransmission of a message is performed in case the original transmission was not received correctly at the base station. At the next instance of the HARQ process, only the first terminal transmits and the other terminals attempt to decode the transmission.

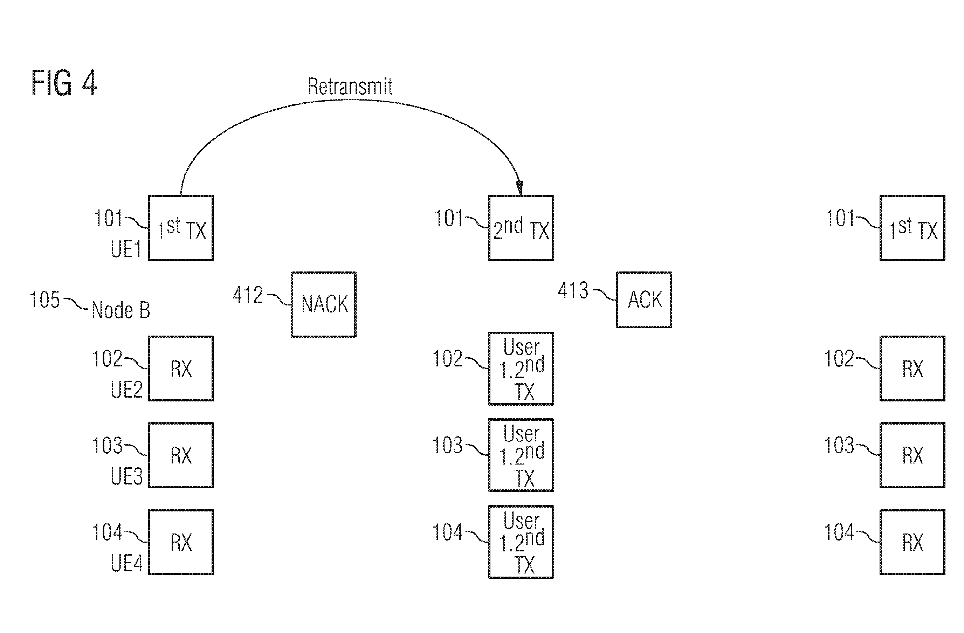

In Fig. 4 the same process is shown in another representation. In the first column the four terminals 101, 102, 103, and 104 and the base station 105 are indicated by boxes. Furthermore, it is schematically indicated that the first terminal 101 performs a transmission (TX) for the first time, while the other terminals 102, 103, and 104 receive (RX) and decode the transmission. Since the base station 105 does not receive the transmission correctly it sends an NACK message 412 which is received by all four terminals. As a result all four terminals 101, 102, 103, and 104 retransmit the original message of terminal 101 in a synchronous manner. Consequently, the base station 105 sends an ACK message 413 which is received by all terminals as well, so that terminal 101 may start to transmit a next message or data packet for a first time, while the other terminals 102, 103, and 104 are listening again to the transmission of terminal 101.

The method of transmitting messages or signals according to an embodiment of the invention may in particular have the advantage that the retransmissions benefit from transmit power from all of the terminals in active state, so that much higher throughput may be possible.

Contrary to such a collaborative operation it would be possible that all four terminals transmit their own data in parallel, as done in the prior art. In that case, each terminal experiences the other three terminals as interference, whereas in the scheme according to an embodiment of the present invention the terminals collaborate, the terminals transmissions add up as constructive signal power.

Furthermore, there may be a diversity gain due to the fact that there is a diversity of transmitters in case of the collaborative transmission used in the embodiment of the present invention.

To illustrate the above mentioned advantages, it is considered that the four terminals, if using normal HSUPA, experience a receive power of 1 unit and that the thermal noise is 1 unit, which equates to an operating Rise over Thermal (RoT) of about 7dB. Then the receive SINR for each terminal is 1 unit (signal) / (1 unit thermal noise + 3 units interference) = 0.25.

When using the scheme according to an exemplary embodiment of the invention, if the terminals transmit with the same scrambling code and the received signal adds constructively, then for retransmissions, the SINR is 16 units (signal) / 1 Unit (thermal noise) = 16.

Thus the gain in SINR is a factor of 64. Of course, each terminal can only transmit ¼ of the time and at least 2 transmissions are required for the scheme to operate, however a significant gain may be achievable.

Although the method is described in connection with an uplink communication the method is of course also adaptable for a downlink communication. In the downlink communication an improved local coverage may be achievable.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### List of reference signs:

- 101: Network element / Terminal
- 102: Network element / Terminal
- 103: Network element / Terminal
- 104: Network element / Terminal
- 105: Base station
- 306: Transmission
- 307: Transmission
- 308: Transmission
- 309: Transmission
- 310: Transmission
- 311: Transmission
- 412: NACK message
- 413: ACK message

## Claims

1. A communication network element (101, 102, 103, 104) for transmitting data in a communication network, the network element (101, 102, 103, 104) comprising:
a detection unit adapted to detect an error message indicating that specific data is not received by another communication network element (105),
a determination unit adapted to determine whether the error message is related to data transmitted by the network element (101, 102, 103, 104), and
a transmitting unit adapted to transmit the specific data to the other network element (105) in case it is determined that the error message is not related to data transmitted by the network element (101, 102, 103, 104).

2. The communication network element (101, 102, 103, 104) according to claim 1, further comprising:
a receiving unit,
wherein the receiving unit is adapted to receive the error message and/or to receive the specific data.

3. The communication network element (101, 102, 103, 104) according to claim 1,
wherein the determination unit is further adapted to determine whether the network element received the specific data correctly before the transmitting unit transmit the specific data to the other network element.

4. The communication network element (101, 102, 103, 104) according to claim 1,
wherein the communication network is a Long Term Evolution network or a Wideband Code Division Multiple Access network. -

5. The communication network element (101, 102, 103, 104) according to claim 1,
wherein the network element (101, 102, 103, 104) is one out of the group consisting of:
a base station,
a user equipment,
a mobile phone,
a PDA, and
a laptop.

6. The communication network element (101, 102, 103, 104) according to claim 1, further comprising:
a synchronising unit, which is adapted to synchronise transmissions of the network element (101, 102, 103, 104) with transmissions of other network elements (101, 102, 103, 104).

7. The communication network element (101, 102, 103, 104) according to claim 1, further comprising:
a receiving unit,
wherein the receiving unit is adapted to receive the specific data, and
wherein the transmitting unit is further adapted to use a same synchronisation timing and/or scrambling code for the transmission of the specific data as used in the transmission of the specific data received by the communication network element.

8. A communication network system comprising:
a first communication network element (101, 102, 103, 104, 105),
a second communication network element (101, 102, 103, 104, 105),
wherein at least one of the first communication network element and the second network element is formed by a communication network element according to claim 1, and
wherein one of the first communication network element and the second network element is formed by the another network element.

9. A method of transmitting data by using a communication network element (101, 102, 103, 104) via a communication network to another communication network element (105), the method comprising:
detecting an error message indicating that specific data is not received by the another communication network element (105),
determining whether the error message is related to data transmitted by the network element (101, 102, 103, 104), and
transmitting the specific data to the another network element (105) in case it is determined that the error message is not related to data transmitted by the network element (101, 102, 103, 104).

10. The method according to claim 9, further comprising:
receiving the specific data at the network element (101, 102, 103, 104).

11. The method according to claim 10, further comprising:
verifying whether the specific data are received correctly at the network element (101, 102, 103, 104), and
transmitting the specific data to the another network element (105) only in case that the specific data are received correctly at the network element (101, 102, 103, 104).

12. The method according to claim 9,
wherein the transmitting the specific data to the another network element (105) is a synchronized transmitting.

13. The method according to claim 12,
wherein the synchronized transmission is performed by several network elements (101, 102, 103, 104) transmitting the same specific data at the same time and/or by using a common scrambling code.

14. A program element, which, when being executed by a processor, is adapted to control or carry out a method according to claim 9.

15. A computer-readable medium, in which a computer program is stored which, when being executed by a processor, is adapted to control or carry out a method according to claim 9.
